# EUROPÄISCHE PATENTSCHRIFT

(11) **EP 0 718 857 B1**
(45) Veröffentlichungstag und Bekanntmachung des Hinweises auf die Patenterteilung: **30.12.1998**
(21) Anmeldenummer: 95119821.7
(22) Anmeldetag: 15.12.1995
(51) Int. Cl.: H01F 38/30

(54) **Schaltanlage mit einer eingebauten Stromwandleranordnung**
Switching arrangement with built in current transformer device
Installation de commutation avec dispositif à transformateur de courant intégré

(30) Priorität: 22.12.1994 DE 4445867
(43) Veröffentlichungstag der Anmeldung: 26.06.1996
(73) Patentinhaber: ABB PATENT GmbH, 68309 Mannheim (DE)
(72) Erfinder: Müller, Ottmar, D-12459 Berlin (DE)
(74) Vertreter: Rupprecht, Klaus, Dipl.-Ing.

(56) Entgegenhaltungen:
- WO-A-79/00729
- DE-U- 8 904 684
- FR-A- 1 100 351
- GB-A- 472 986

## Beschreibung

Die Erfindung betrifft eine Schaltanlage gemäß dem Oberbegriff des Anspruches 1.

Ringkernwandler werden in gasisolierten Schaltanlagen sowohl innerhalb der Kapselung als auch als Aufsteckwandler um die Kapselung herum angeordnet. Die dreipolige Kapselung bedingt naturgemäß eine Spulenhalterung in der Kapselung; die einpolige Kapselung der Ringkernwandler erfordert spezielle Gefäße, die die Ringkerne aufnehmen, und die über entsprechende Deckel bzw. Flansche mit der Kapselung verschraubt sind. Ein Nachteil ist der sich dabei ergebende große Flansch, dessen Durchmesser die Feldbreite mitbestimmt.

Aus dem DE 89 04 684 U ist ein Ringkernwandler der eingangs genannten Art bekannt geworden. Dieser Ringkernwandler besitzt ein Innenrohr, das mittels eines radialen Flansches mit einem Ende mit der Kapselung fest verbunden ist. Das Außenrohr ist mit seinem benachbarten Ende an dem radialen Flansch des Innenrohres mittels einer Schraubverbindung befestigt; das andere Ende des Außenrohres ist mit der Kapselung fest verbunden.

Damit ergibt sich ein relativ großer radialer Flansch am Innenrohr, der die Außenkapselung dort überragt.

Aufgabe der Erfindung ist es, eine Schaltanlage der eingangs genannten Art weiter zu verbessern und zu vereinfachen, insbesondere ihre Abmessungen zu verkleinern.

Diese Aufgabe wird erfindungsgemäß gelöst durch die kennzeichnenden Merkmale des Anspruches 1.

Mit der erfindungsgemäßen Ausgestaltung wird die Stromwandleranordnung mit den Ringkernen und Spulen Teil der selbsttragenden Dünnblechbehälterkapselung, so daß keine separaten Flansche mehr nötig werden, die über die Ringkernwandlerabmessungen nennenswert hinausragen. Dies wird dadurch erreicht, daß der Ringkernwandler mit den Spulen zwischen einem inneren und einem äußeren Rohrstück untergebracht ist, wobei der selbsttragende Effekt durch das allseitig von außen die Ringkerne umfassende Rohrstück als Teil der Kapselung erzielt wird.

Weitere vorteilhafte Ausgestaltungen und Verbesserungen der Erfindung sind den Unteransprüchen zu entnehmen.

Die Abschnitte der Außenkapselung sind mit dem dazwischen in den Leitungszug eingesetzten äußeren Rohrstück stirnseitig mit den Enden des Rohrstückes verbunden. Damit wird das äußere Rohrstück, das aus unmagnetischem Material, also aus unmagnetischem Metallblech besteht, integrierter und tragender Teil der Außenkapselung. Zur Bildung der Stromwandleranordnung ist in das äußere Rohrstück das innere Rohrstück, das in Form einer Zylinderschale ausgebildet ist, eingeklemmt, wobei die Zylinderschale die Ringkerne und die Spulen aufnimmt. Die Einklemmung des inneren Rohrstückes, also der Spulen- bzw. Ringkernschale, erfolgt über isolierende Dichtungsringe, vorzugsweise O-Ringe und dadurch kann das innere Rohrstück auch als Spannungsteiler dienen, so daß eine integrierte Spannungswandleranordnung entsteht. Soll ein solcher Spannungsteiler nicht gewünscht sein, dann kann das innere Rohrstück zur Potentialanlenkung elektrisch leitend mit dem äußeren Rohrstück verbunden werden. Zum Klemmen des inneren Rohrstückes in dem äußeren Rohrstück werden die Reibungseigenschaften des Dichtungsringes, vorzugsweise also des O-Ringes beim Klemmvorgang ausgenutzt.

Der Zwischenraum zwischen dem inneren und äußeren Rohrstück kann mit Gießharz ausgegossen sein, wobei das innere und äußere Rohrstück als verlorene Formen verwendet werden können. Das Gießharz schützt die Spulen- und Ringkernisolierung vor Feuchteaufnahme. Die Herstellung der Stromwandleranordnung erfolgt so, daß zunächst das innere Rohrstück gefertigt wird. Sodann werden die Ringkerne und die Spulen eingebracht und die äußeren Rohrteilstücke darübergeschoben und miteinander verschweißt. Danach kann der Zwischenraum mit Gießharz ausgefüllt werden. Das innerhalb des äußeren Rohrstückes befindliche Schutzblech dient bei der Endverschweißung dazu, diesen Vorgang ohne nenneswerte Beeinflussung des Gases durchführen zu können und darüberhinaus zur Vereinfachung der Zentrierung beim Schweißvorgang selbst.

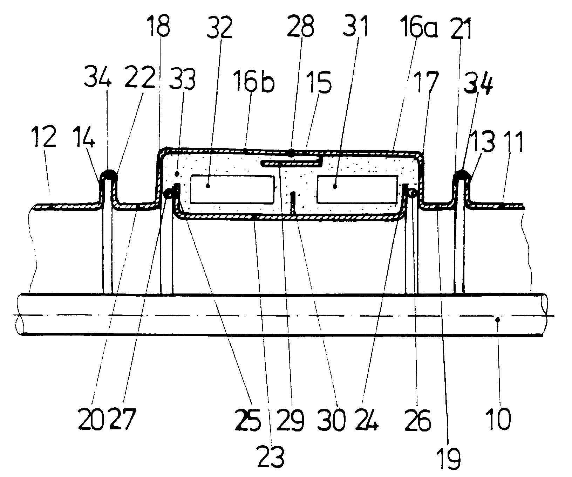

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.
Es zeigt die einzige Figur eine Längsschnittansicht durch eine erfindungsgemäße Schaltanlage.

Der Stromwandler ist in eine einpolig gekapselte, gasisolierte Hochspannungsanlage eingesetzt. Diese besitzt einen Innenleiter 10, der von Außenleitern 11 und 12, die aus Metallblech mit dünner Wandstärke gebildet sind, umgeben ist. Die Außenleiter 11 und 12, die als Metallkapselung dienen, besitzen an ihren aufeinanderzuweisenden Enden radial nach außen vorspringende Randborde 13 und 14. Zwischen die Randborde 13 und 14 ist ein Rohrstück 15 eingesetzt. Dieses Rohrstück 15 besitzt einen zylindrischen Abschnitt 16 mit radial nach innen laufenden Randborden 17 und 18 an seinen Enden, an die sich axial verlaufende Teilstücke 19 und 20 anschließen, an denen wiederum radiale Teilstücke 21 und 22 angeschlossen sind. Der Durchmesser der Abschnitte 19 und 20 entspricht dem Durchmesser der Außenleiter 11 und 12 und die radialen Abmessungen der Teilstücke 21 und 22 entsprechen denen der Randborde 13 und 14.

Innerhalb der beiden Randborde 17 und 18 ist ein inneres Rohrstück 23 eingesetzt, das an seinen freien Enden radial nach außen verlaufende Randborde 24 und 25 aufweist; diese Randborde sind von den Randborden 17 und 18 unter Zwischenfügung einer O-Ringdichtung 26 und 27 umfaßt. Der Innendurchmesser des inneren Rohrstückes 23 ist geringfügig kleiner als der Innendurchmesser der Außenkapselung und der Außendurchmesser des zylindrischen Abschnittes 16 entspricht etwa dem Außendurchmesser der Randborde 13, 14 bzw. Teilstücke 21; 22. Das Rohrstück 15 ist in zwei Rohrteilstücke 16a und 16b unterteilt, welche beiden mittels einer Schweißnaht 28 miteinander verbunden sind. An dem Rohrteilstück 16a ist ein als Abschirmblech dienendes Schutzblech 29 befestigt, das auch an dem Rohrteilstück 16b befestigt sein kann. Es ist als Ring ausgebildet. Auf der Außenfläche des inneren Rohrstückes 23 ist ein umlaufender radialer Steg 30 vorzugsweise angeschweißt, der zwei Ringkerne 31 und 32 voneinander trennt. Der Raum zwischen dem inneren und dem äußeren Rohrstück 23 bzw. 15 ist mit einer isolierenden Gießharzfüllung 33 befüllt. In analoger Weise könnte auch eine dritte oder vierter Ringkern integriert werden.

Die Außenkanten der Randborde 13, 14 und der Teilstücke 21 und 22 sind jeweils mit einer Schweißnaht 34 miteinander verbunden.

Das oben beschriebene Ausführungsbeispiel kann wahlweise auch als eigenständige Anlagenkomponente gestaltet werden, wenn zwischen dem Innenleiter 10 und dem Rohrstück 23 ein Abstandshalter, beispielsweise in Form einer Isolierscheibe, angeordnet ist, so daß der Innenleiter 10 zum Rohrstück 23 genau fixiert ist. Der Abstandshalter kann aus sog. gemagertem Gießharz bestehen und damit in den Gießprozeß der Ringkerne einbezogen werden. Gemagertes Gießharz ist mit Füllstoff, beispielsweise Al₂O₃ oder Sand armiertes Gießharz. Der Innenleiter 10 sollte in seiner Länge den Abstand der Teilstücke 21 und 22 nicht überschreiten, damit die Montage möglich ist. Die Stirnflächen des Innenleiters 10 können dann Steckkontaktelemente aufnehmen, damit sie mit den daran anschließenden weiterführenden Innenleitern einfach verbunden werden können.

## Patentansprüche

1. Teilweise einpolig gekapselte, gasisolierte, einen Innenleiter (10) und einen aus Blechmaterial aufgebauten, als Kapselung dienenden Außenleiter (11, 12) aufweisende Schaltanlage mit einer Stromwandleranordnung mit einem Ringkernwandler und mit zwei konzentrischen Rohrstücken (15, 23), zwischen denen der Ringkernwandler angeordnet ist, dadurch gekennzeichnet, daß das äußere Rohrstück (15), das aus Blechmaterial mit der gleichen Wandstärke wie das des übrigen Außenleiters (11, 12) gebildet ist, mit beiden Enden am Außenleiter (11, 12) befestigt ist, und daß das innere Rohrstück (23) unter Zwischenfügung je einer Dichtung (27, 26) im äußeren Rohrstück (15) gehalten ist.

2. Schaltanlage nach Anspruch 1, dadurch gekennzeichnet, daß das äußere Rohrstück (15) mit dem Außenleiter (11, 12) verschweißt ist.

3. Schaltanlage nach einem der Ansprüche 1 und 2, dadurch gekennzeichnet, daß das innere Rohrstück (23) an seinen Enden je einen radial nach außen ragenden Randbord (24, 25) und das äußere Rohrstück (15) je einen radial nach innen vorspringenden Randbord (17, 18) aufweist, und daß die Randborde (24, 25) des inneren Rohrstückes (23) unter Zwischenfügung je einer Dichtung (26, 27) von den Randborden (17, 18) des äußeren Rohrstückes (15) umfaßt sind.

4. Schaltanlage nach Anspruch 3, dadurch gekennzeichnet, daß an den Randborden (17, 18) des äußeren Rohrstückes (15) je ein axiales (19, 20) und daran ein radiales Teilstück (21, 22) anschließt, daß die Außenkapselung (11, 12) an ihren dem Stromwandler zugewandten Enden einen den radialen Teilstücken (21, 22) des Rohrstückes (15) angepaßten radial nach außen vorspringenden Randbord (13, 14) aufweist, und daß die radialen Teilstücke (21, 22) mit dem jeweils anschließenden Randbord (13, 14) der Außenkapselung vorzugsweise mittels Schweißverbindung an ihren Außenkanten fest mit diesen verbunden ist.

5. Schaltanlage nach einem der vorherigen Ansprüche, dadurch gekennzeichnet, daß das äußere Rohrstück (15) aus zwei Teilrohrstücken (16a, 16b) gebildet ist, die miteinander verschweißt sind.

6. Schaltanlage nach Anspruch 5, dadurch gekennzeichnet, daß die axialen Längen der Teilrohrstücke (16a, 16b) gleich sind.

7. Schaltanlage nach Anspruch 6, dadurch gekennzeichnet, daß innerhalb des äußeren Rohrstückes (15) ein die Schweißnaht (28) zwischen den beiden Teilrohrstücken abschirmendes Schutzblech (29) vorgesehen ist.

8. Schaltanlage nach Anspruch 7, dadurch gekennzeichnet, daß bei Vorhandensein zweier Ringkerne (31, 32) zwischen beiden ein an der Außenfläche des inneren Rohrstückes (23) angeordneter umlaufender Steg (30) vorgesehen ist.

9. Schaltanlage nach Anspruch 8, dadurch gekennzeichnet, daß das äußere Rohrstück (15) aus unmagnetischem Metallblech besteht.

## Claims

1. Switchgear assembly, one pole of which is partially encapsulated and which is gas-insulated and has an inner conductor (10) and an outer conductor (11, 12) which is formed from sheet-metal material and is used as encapsulation, having a current transformer arrangement and a toroidal core transformer, and having two concentric tubular pieces (15, 23) between which the toroidal core transformer is arranged, characterized in that the outer tubular piece (15), which is formed from sheet-metal material having the same wall thickness as that of the rest of the outer conductor (11, 12), is attached at both ends to the outer conductor (11, 12), and in that the inner tubular piece (23) is held in the outer tubular piece (15) with the interposition of in each case one seal (27, 26).

2. Switchgear assembly according to Claim 1, characterized in that the outer tubular piece (15) is welded to the outer conductor (11, 12).

3. Switchgear assembly according to one of Claims 1 and 2, characterized in that the inner tubular piece (23) has at each of its ends an edge border (24, 25) which projects radially outwards, and the outer tubular piece (15) has in each case one edge border (17, 18) which projects radially inwards, and in that the edge borders (24, 25) of the inner tubular piece (23) are surrounded by the edge borders (17, 18) of the outer tubular piece (15) with the interposition of in each case one seal (26, 27).

4. Switchgear assembly according to Claim 3, characterized in that in each case one axial element (19, 20) is connected to the edge borders (17, 18) of the outer tubular piece (15), and a radial element (21, 22) is connected to each axial element (19, 20), in that the outer encapsulation (11, 12) has at its ends facing the current transformer an edge border (13, 14) which is matched to the radial elements (21, 22) of the tubular piece (15) and projects radially outwards, and in that the radial elements (21, 22) is [sic] firmly connected to the outer edges of the outer encapsulation by means of the respectively adjacent edge border (13, 14) of the outer encapsulation, preferably by means of a welded joint to the outer edges of said outer encapsulation [sic] .

5. Switchgear assembly according to one of the preceding claims, characterized in that the outer tubular piece (15) is formed from two partial tubular pieces (16a, 16b) which are welded to one another.

6. Switchgear assembly according to Claim 5, characterized in that the axial lengths of the partial tubular pieces (16a, 16b) are the same.

7. Switchgear assembly according to Claim 6, characterized in that a protective sheet (29), which screens the weld seam (28) between the two partial tubular pieces, is provided inside the outer tubular piece (15).

8. Switchgear assembly according to Claim 7, characterized in that, if two toroidal cores (31, 32) are present, a circumferential web (30), which is arranged on the outer surface of the inner tubular piece (23), is provided between them.

9. Switchgear assembly according to Claim 8, characterized in that the outer tubular piece (15) is composed of nonmagnetic sheet metal.

## Revendications

1. Installation de commutation à un seul pôle sous enveloppe à isolation gazeuse partielle comportant un conducteur intérieur (10) et un conducteur extérieur (11, 12) en tôle servant de blindage, avec un transformateur à noyau annulaire et deux tronçons de tube (15, 23) concentriques, entre lesquels le transformateur à noyau annulaire est disposé, caractérisée par le fait que le tronçon de tube extérieur (15) qui est formé de tôle de même épaisseur que le reste du conducteur extérieur (11, 12) est fixé par deux extrémités au conducteur extérieur (11, 12) et par le fait que le tronçon de tube intérieur (23) est tenu dans le tronçon de tube extérieur (15) avec interposition d'un joint (27, 26).

2. Installation de commutation selon la revendication 1, caractérisée par le fait que le tronçon de tube extérieur (15) est soudé au conducteur extérieur (11, 12).

3. Installation de commutation selon les revendications 1 ou 2, caractérisée par le fait que le tronçon de tube intérieur (23) porte à chacune de ses extrémités un rebord (24, 25) qui fait saillie radialement vers l'extérieur et le tronçon de tube extérieur (15) porte un rebord (17, 18) qui fait saillie radialement vers l'intérieur et par le fait que les rebords (24, 25) du tronçon de tube intérieur (23) sont entourés par les rebords (17, 18) du tronçon de tube extérieur (15) avec interposition d'un joint (26, 27).

4. Installation de commutation selon la revendication 3, caractérisée par le fait qu'aux rebords (17, 18) du tronçon de tube extérieur (15) font suite chaque fois une partie de tronçon axiale (19, 20) et une partie de tronçon radiale (21, 22), par le fait que le blindage extérieur (11, 12), à ses extrémités tournées vers le transformateur, comporte un rebord (13, 14) qui fait saillie radialement vers l'extérieur et est adapté aux parties de tronçon (21, 22) radiales du tronçon de tube (15) et par le fait que les parties de tronçon (21, 22) sont reliées au rebord (13, 14) consécutif concerné du blindage extérieur de préférence par une liaison soudée au niveau de l'arête extérieure dudit rebord.

5. Installation de commutation selon une des revendications précédentes, caractérisée par le fait que le tronçon de tube extérieur (15) est formé de deux parties de tronçon (16a, 16b) qui sont soudées l'une à l'autre.

6. Installation de commutation selon la revendication 5, caractérisée par le fait que les longueurs axiales des parties de tronçon (16a, 16b) sont égales.

7. Installation de commutation selon la revendication 6, caractérisée par le fait qu'il est prévu à l'intérieur du tronçon de tube extérieur (15) une tôle de protection (29) qui protège la soudure (28) entre les deux parties de tronçon de tube.

8. Installation de commutation selon la revendication 7, caractérisée par le fait que lorsque deux noyaux annulaires (31, 32) sont présents, une cloison (30) continue disposée sur la surface extérieure du tronçon de tube (23) intérieur est prévue entre les deux noyaux.

9. Installation de commutation selon la revendication X, caractérisée par le fait que le tronçon de tube extérieur (15) est en tôle métallique non magnétique.
